# EUROPEAN PATENT APPLICATION

(11) **EP 4 521 698 A1**
(43) Date of publication of application: **12.03.2025**
(21) Application number: 24197205.8
(22) Date of filing: 29.08.2024
(51) Int. Cl.: H04L 41/122, H04L 43/0811, H04L 43/10, H04L 41/0873

(54) **A METHOD OF CONFIGURING A CABLE NETWORK USING VIRTUAL CABLING ENGINE**

(30) Priority: 05.09.2023 FI 20235988
(71) Applicant: Clouder Oy, 00380 Helsinki (FI)
(72) Inventor: Grönlund, Tomi, 00130 Helsinki (FI); Pirttimaa, Ilkka, 00940 Helsinki (FI); Toivonen, Jussi, 01800 Klaukkala (FI); Grönlund, Emma, 00130 Helsinki (FI)
(74) Representative: Moosedog Oy

(57) **Abstract**

Disclosed is a computer-implemented method for configuring a cable network, the method comprising: connecting a first virtual cabling engine (206) via management connection (210) with a controlling unit (204) of a building (202); connecting to port(s) (1-4) of a second virtual cabling engine (212) cable(s) (A-D) of device(s) (216A-D) of a connected site (208); configuring the second virtual cabling engine to communicate over communication network (218) with the first virtual cabling engine; sending from the first virtual cabling engine a first probe message to a first port of the second virtual cabling engine to be forwarded to a first device (1) of the device(s) in the connected site; receiving from the first device, via the second virtual cabling engine a first reply to the first probe message; and generating by the first virtual cabling engine based on the first reply a first incident response.

## Description

### TECHNICAL FIELD

The present disclosure relates to computer-implemented methods for configuring cable networks. Moreover, the present disclosure relates to data processing systems for managing cable networks. Furthermore, the present disclosure relates to computer programs for managing cable networks. Additionally, the present disclosure relates to computer-readable storage media comprising instructions for managing cable networks.

### BACKGROUND

With the advancement in technology, reliance on electrical appliances and/or electronic appliances has increased. Contemporary buildings are being constructed with integrated technology, wherein the integrated technology is used to interconnect the electrical appliances and/or the electronic appliances with each other, thereby paving way for smart building systems. This integrated technology is developed often using physical cables which are installed in such buildings to provide wired connections for enhanced connectivity in such buildings. The physical cables provide dedicated connections from each space within such buildings, and such connections are typically connected to a central system of the building. Such central system is generally referred to as Building Management System (BMS). For sake of brevity, the terms "*electrical appliances*" and *"electronic appliances*" are interchangeably used with the term "*devices*"*.*

Despite recent advancements in providing dedicated connections in such buildings, existing techniques and equipment for connecting to the BMS of the building has several limitations associated therewith. For establishing the BMS, each of the devices arranged in each room of each space of the building is to be connected to the BMS. However, there are communication protocols of each device which are typically proprietary, hence there is no interoperability between different vendors and different versions of the devices. Furthermore, a number of physical cables required to connect each device to the BMS and/or with each other is extensive. Hence, when the building is a multi-storey building with 10 stories, thousands of physical cables (in other words, several kilometres of physical cables) are required to provide dedicated connection in said multi-storey building.

Therefore, in light of the foregoing discussion, in the field of cable network configuration for building management systems, there exists a need to overcome the problem how to enhance interoperability, reduce the extensive use of physical cabling, and facilitate the automatic configuration and management of network connections between devices and the Building Management System (BMS)..

### SUMMARY

The aim of the present disclosure is to provide a computer-implemented method for configuring a cable network, and a data processing system, a computer program, and a computer-readable storage medium for managing the cable network, to facilitate automatic configuration of the cable network within the building. The aim of the present disclosure is achieved by computer-implemented methods for configuring cable networks, and data processing systems, computer programs, and computer-readable storage media for managing cable networks as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates steps of a computer-implemented method for configuring a cable network, in accordance with an embodiment of the present disclosure; and
FIG. 2 shows an exemplary environment in which the computer-implemented steps of FIG. 1 are used, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a computer-implemented method for configuring a cable network, the method comprising:
(i) connecting a first virtual cabling engine via management connection with a controlling unit of a building;
(ii) connecting to one or more ports of a second virtual cabling engine one or more cables of one or more devices of a connected site;
(iii) configuring the second virtual cabling engine to communicate over communication network with the first virtual cabling engine;
(iv) sending from the first virtual cabling engine a first probe message to a first port of the second virtual cabling engine to be forwarded to a first device of the one or more devices in the connected site;
(v) receiving from the first device, via the second virtual cabling engine a first reply to the first probe message; and
(vi) generating by the first virtual cabling engine based on the first reply a first incident response.

The method according to the present disclosure enables the reduction of extensive physical cabling and facilitates the automatic configuration and management of network connections between devices and the Building Management System (BMS). The method uses virtual cabling engines that convert proprietary signals of different devices into unified signals, allowing devices from different vendors to communicate seamlessly without the need for manual configuration. By using a virtual cabling system, the method eliminates the need for extensive physical cabling within the building. This significantly reduces installation complexity, cost, and maintenance efforts. The method automates the process of configuring and managing network connections through probe messages and incident responses, ensuring devices are correctly connected and functional without manual intervention.

The conversion of proprietary signals into unified signals by the virtual cabling engines ensures seamless communication between devices from different vendors. The virtual cabling system replaces physical cables, reducing installation and maintenance costs and complexity. The use of probe messages and incident responses allows for automatic detection, configuration, and management of devices, reducing the need for manual setup and troubleshooting. The system can easily scale to accommodate additional devices and connections without the need for additional physical infrastructure. Automated configuration and management reduce the likelihood of errors during installation and operation.

Connecting a first virtual cabling engine via management connection with a controlling unit of a building enables the establishment of a management connection between the first virtual cabling engine and the building's controlling unit (e.g., BMS). This allows centralized control and monitoring of the cable network, facilitating streamlined management and configuration. It further ensures a centralized control and management point for the network configuration.

Connecting to one or more ports of a second virtual cabling engine one or more cables of one or more devices of a connected site establishes a physical layer connection for virtual network configuration and enables the second virtual cabling engine to interface with the devices, preparing for communication with the first virtual cabling engine. It reduces physical cabling needs within the site by consolidating connections to the second virtual cabling engine.

Configuring the second virtual cabling engine to communicate over a communication network with the first virtual cabling engine establishes a virtual link between the two engines, allowing for data exchange and control commands to be sent and received.

Sending from the first virtual cabling engine a first probe message to a first port of the second virtual cabling engine to be forwarded to a first device of the one or more devices in the connected site initiates communication and tests connectivity with the device, allowing the system to identify and verify the status of the connected device.

Receiving from the first device, via the second virtual cabling engine, a first reply to the first probe message confirms connectivity and functionality, providing feedback for further configuration steps.

Generating by the first virtual cabling engine based on the first reply a first incident response automates the configuration and troubleshooting process, ensuring the device is correctly integrated into the network and reducing the need for manual intervention.

By performing these steps, the method effectively enhances interoperability, reduces the reliance on physical cabling, and automates the configuration and management of network connections in building management systems.

In a second aspect, the present disclosure provides a data processing system for managing a cable network, the data processing system comprising means for carrying out the computer-implemented method of the first aspect.

A comprehensive data processing system is designed to manage a cable network, incorporating the means to carry out the methods according to the embodiments of the present disclosure. By integrating the aspects of the method into the data processing system, it enhances interoperability, reduces the need for extensive physical cabling, and facilitates efficient automatic configuration and management of network connections between devices and the BMS. The data processing system executes the embodiments of the method, including connecting virtual cabling engines, sending probe messages, analyzing responses, configuring devices, and managing the network dynamically to provide a unified and automated solution for configuring and managing network connections, ensuring devices are seamlessly integrated and operational within the BMS. The data processing system supports a wide range of devices and protocols, ensuring seamless integration and communication within the network. The system's capabilities minimize the need for extensive physical cabling by utilizing virtual cabling and automated configuration processes. The system automates the entire process of network configuration and management, reducing manual intervention and ensuring optimal performance.

Integrating the aspects of the method into the data processing system ensures a cohesive and efficient approach to managing the cable network, enhancing reliability and performance. The system includes hardware and software components such as processors, memory, network adapters, and specialized software applications. Centralizing all network management functions within the data processing system streamlines operations and improves efficiency. The data processing system automates the process of device identification, configuration, and management, and reduces the need for manual intervention and ensuring optimal network performance. The data processing system can dynamically adjust configurations based on real-time data and historical records, maintaining network reliability and performance. The data processing system can further scale to accommodate various sizes and complexities of networks, making it suitable for different types of buildings and configurations.

In an example, the data processing system manages the network connections of various devices within a large office building, automatically configuring HVAC systems, lighting controls, and security systems to ensure optimal performance and energy efficiency.

In another example, e.g., in a smart home, the data processing system manages the connections between appliances, sensors, and the central control unit, ensuring seamless communication and functionality, such as adjusting lighting based on occupancy or controlling the thermostat remotely.

In another example, the system manages the network connections within a factory, ensuring that sensors, actuators, and control systems communicate efficiently to maintain optimal production processes and equipment performance.

In a third aspect, the present disclosure provides a computer program for managing a cable network, the computer program comprising instructions which, when the computer program is executed by a data processing system, cause the data processing system to carry out the computer-implemented method of the first aspect.

A set of instructions designed to be executed by a data processing system, enables it to carry out the method according to the embodiments of the present disclosure and to perform the necessary tasks. This reduces the need for extensive physical cabling, and facilitates efficient automatic configuration and management of network connections between devices and the BMS. The computer program ensures that the data processing system can handle a wide range of devices and protocols, improving overall system integration. By automating network management tasks, the software minimizes the need for manual configuration and additional cabling. The computer program enables the data processing system to automate the entire process of network configuration and management, ensuring optimal performance with minimal manual intervention. This approach allows for flexibility and scalability in managing network connections, ensuring that the system can adapt to various network configurations and requirements.

The computer program includes detailed instructions for connecting virtual cabling engines, sending probe messages, analyzing responses, configuring devices, and managing the network dynamically. When executed by the data processing system, these instructions automate the network management tasks, ensuring efficient and reliable operation to provide a flexible and scalable software solution for managing network connections, enhancing interoperability, reducing the need for physical cabling, and facilitating automatic configuration and management. The computer program allows for easy updates and modifications, ensuring that the network management system can adapt to new devices, protocols, and requirements. By automating the configuration and management tasks, the software reduces the need for manual intervention, streamlining operations and improving efficiency. The computer program can be deployed across various types and sizes of networks, from small residential setups to large commercial buildings, making it a versatile solution. The automated processes ensure consistent and accurate network management, reducing the risk of errors and enhancing overall reliability.

In an example, the computer program manages the network connections of various devices within a smart building, automating tasks such as configuring HVAC systems, lighting controls, and security systems to ensure optimal performance and energy efficiency.

In another example, e.g., in a smart home setup, the computer program automates the management of connections between appliances, sensors, and the central control unit, enabling seamless communication and functionality, such as adjusting lighting based on occupancy or controlling the thermostat remotely.

In another example, the computer program manages the network connections within an industrial setting, ensuring that sensors, actuators, and control systems communicate efficiently to maintain optimal production processes and equipment performance.

In a fourth aspect, the present disclosure provides a computer-readable storage medium comprising instructions for managing a cable network, which when executed by a data processing system, cause the data processing system to carry out the computer-implemented method of the first aspect.

A storage medium (such as a hard drive, SSD, USB flash drive, or cloud storage) that comprises instructions necessary for managing a cable network provides a means to distribute and install the software necessary for network management, ensuring that the data processing system can execute the required tasks. By providing the means to store and distribute the software necessary for enhancing interoperability, reducing the need for extensive physical cabling, and facilitating efficient automatic configuration and management of network connections between devices and the BMS. The stored instructions ensure the data processing system can handle a wide range of devices and protocols, improving overall system integration. The computer program stored on the storage medium automates network management tasks, minimizing the need for manual configuration and additional cabling. The instructions enable the data processing system to automate the entire process of network configuration and management, ensuring optimal performance with minimal manual intervention.

Upon execution, the instructions automate tasks such as connecting virtual cabling engines, sending probe messages, analyzing responses, configuring devices, and managing the network dynamically to provide a reliable and efficient way to distribute and install the software needed for managing network connections, enhancing interoperability, reducing physical cabling needs, and facilitating automatic configuration and management. The storage medium ensures that the software can be easily distributed and installed on data processing systems, facilitating widespread adoption and implementation. The instructions automate the configuration and management tasks, reducing the need for manual intervention and ensuring consistent performance. The computer program stored on the storage medium can be updated and modified as needed, allowing the system to adapt to new devices, protocols, and requirements. By automating the management process, the software ensures that the network operates efficiently and reliably, minimizing downtime and errors.

In an example, the storage medium comprises computer program that, when installed on a data processing system in a commercial building, automates the management of HVAC, lighting, and security systems, ensuring optimal performance and energy efficiency.

In another example, e.g., in a residential setting, the storage medium stores instructions for managing connections between smart appliances, sensors, and a central control unit, enabling seamless communication and functionality.

In another example, e.g., in an industrial environment, the storage medium holds computer program that manages connections between sensors, actuators, and control systems, ensuring efficient production processes and equipment performance.

In the aforementioned computer-implemented method for configuring the cable network, a number of physical cables used conventionally are reduced. This is achieved by replacing the physical cables with the communication network. The first virtual cabling engine and the second virtual cabling engine establishes connection with the one or more devices, and with each other, wherein the first virtual cabling engine and the second virtual cabling engine is configured in such a manner that proprietary signals of each of the one or more devices are converted to unified signals, and vice versa. Hence, the one or more devices or the controlling unit need not be configured in any manner, which decreases a requirement of processing resources and time. Furthermore, connection of the one or more devices with the first virtual cabling engine is synergistically achieved by sending the first probe message, receiving the first reply to the first probe message and generating the first incident response, by the first virtual cabling engine. Beneficially, this facilitates automatic configuration of the one or more cables of the one or more devices with the one or more ports of the second virtual cabling engine. This ensures that the one or more devices are connected in a required manner with the first virtual cabling engine, even in instances when there is any error during installation. Moreover, the aforementioned data processing system is used to manage the cable network, wherein the data processing system is dynamic in nature. Using the means of the data processing system, the computer-implemented method is easy to implement and inexpensive.

Throughout the present disclosure, the term "*cable network*" refers to a simulated network infrastructure or an emulated network infrastructure within the building, that is used to achieve network connectivity, data transmission, and communication, within the building. These are achieved by virtual cables which mimic a behaviour of physical cables that could be used in the building. Herein, the term "b*uilding*" refers to a house or a premise. Examples of the building may include, but are not limited to, a house (for example, such as a bungalow, a villa, an apartment, and the like), a housing complex (for example, a multi-storey structure having multiple apartments), a hotel, a hospital, a commercial establishment (for example, such as a shop, a shopping mall, an office building, and the like), an industrial building (for example, such as a workshop, a factory). Optionally, the building is divided into connected sites within the building, wherein the connected site comprises at least one room. Examples of the connected site may include, but are not limited to, an apartment in the housing complex, a suite in the office building, and a workstation in the industrial building.

It will be appreciated that the computer-implemented method is implemented using a means comprised in a data processing system. Herein, the term "*data processing system*" refers to programmable and/or non-programmable components configured to execute one or more software applications for storing, processing, and/or sharing data and/or a set of instructions. The data processing system could include, for example, a component included within a network. Additionally, the data processing system could include one or more data processing facilities for storing, processing, and/or sharing data and/or set of instructions. Furthermore, the data processing system includes hardware, software, firmware, or a combination of these, suitable for storing and processing various information and services accessed by any user. Optionally, the means is any of: a processor, a memory, a network adaptor. Such means are well-known in the art.

Throughout the present disclosure, the term "*virtual cabling engine*" refers to a virtualized solution (in other words, a software-based solution) that is used for at least one of: managing, simulating, emulating the cable network within the building. A given virtual cabling engine encompasses namely, the first virtual cabling engine and/or the second virtual cabling engine. Optionally, the first virtual cabling engine is arranged in a control room or an engine room, wherein the building comprises the control room and/or the engine room. The first virtual cabling engine is used to configure the cable network in the building remotely. Optionally, the first virtual cabling engine is connected to a cloud-based server wirelessly, wherein the cloud-based server is configured to make routing rules and/or configure the cable network. The routing rules are explained later in the text. Optionally, the second virtual cabling engine is arranged within the connected site. The second virtual cabling engine is used to configure the connected site remotely.

Throughout the present disclosure, the term "*controlling unit*" refers to a centralized control system of the building that is used to manage and control the cable network as per requirement. Herein, the management connection is used to connect the first virtual cabling engine in the control room to the controlling unit of the building. The term "*management connection*" refers to a communication link that is established to manage and configure the first virtual cabling engine, thereby facilitating connectivity and/or communication between the connected sites within the building. Examples of the controlling unit may include, but are not limited to, a controller, a Building Management System (BMS), a fire monitoring system, a lighting control system, an energy management system, and a Heating, Ventilation and Air Conditioning (HVAC) control system. Optionally, the controlling unit comprises at least one connection port, wherein the at least one connection port is a virtual input/output interface emulating at least one physical connection port, from where the management connection to/from the first virtual cabling engine is established.

The second virtual cabling engine comprises the one or more ports where the one or more cables of the one or more devices are connected in a virtual manner. Herein, the term "*port*" refers to virtual input/output interface emulating a physical port, which is used to connect the second virtual cabling engine and the one or more devices using the one or more cables. Moreover, the one or more cables are digital representations of one or more physical cables that are used to connect the one or more devices with the second virtual cabling engine. Moreover, the one or more devices are arranged within the connected site, wherein the one or more devices requires data connectivity or signal connectivity for operation. Examples of the one or more devices may include, but are not limited to, a heating device, a cooling device, a temperature sensor, a humidity sensor, a ventilation damper device, a fire damper device, an electric metering device, and an actuator (for example, such as an actuator to open and close a window and/or a door).

In a first example, the building may be a housing complex. The connected site in the housing complex may be an apartment. A portion of the apartment comprises the second virtual cable engine, and a remaining portion of the apartment may comprise two rooms, namely, Room 1 and Room 2. There may be four devices in the apartment, wherein the four devices maybe a first heater, a second heater, a first temperature sensor, a second temperature sensor. The four devices may be arranged in the two rooms in a following manner: the first heater and the first temperature sensor may be arranged in Room 1, and the second heater and the second temperature sensor may be arranged in Room 2. The second virtual cable engine may comprise four ports, namely, Port 1, Port 2, Port 3, and Port 4. Due to an error during installation, the four devices may be connected to the four ports via the one or more cables, namely, cable A, cable B, cable C, and cable D in a following manner: the Port 1 may be connected with the second temperature sensor through the cable A, the Port 2 may be connected with the first heater through the cable B, the Port 3 may be connected with the first temperature sensor through the cable C, and the port 4 may yet to be connected with the second heater through the cable D. In this regard, an initial purpose of installation of the cable network may be to connect the first heater to the Port 1.

Throughout the present disclosure, the term *"communication network"* refers to an arrangement of interconnected programmable and/or non-programmable components that are configured to facilitate communication between the first virtual cabling engine and the second virtual cabling engine. Furthermore, the communication network may include, but is not limited to, one or more peer-to-peer network, a hybrid peer-to-peer network, local area networks (LANs), radio access networks (RANs), metropolitan area networks (MANs), wide area networks (WANs), all or a portion of a public network such as the Internet, a private network, a cellular network, and any other communication system or systems at one or more locations. Additionally, the communication network includes wired or wireless communication that can be carried out via any number of known protocols, including, but not limited to, Internet Protocol (IP), Wireless Access Protocol (WAP), Frame Relay, or Asynchronous Transfer Mode (ATM). The communication network is provided in a wired manner using an Ethernet cable, and in a wireless manner using the LANs, the RANs, the MANs, the WANs and for example 4G/5G/6G. The second virtual cabling engine is configured in such a manner that proprietary signals of the one or more devices in the connected site and that of the communication protocols are converted to unified signals and vice-versa in order to communicate over the communication network. A technical effect of configuring the second virtual cabling engine is that the one or more devices can be used as they are, without making any changes to said one or more devices and/or the controlling unit.

Optionally, when configuring the second virtual cabling engine, at least one of: at least one setting, at least one parameter of the second virtual cabling engine is adjusted to establish communication with the first virtual cabling engine over the communication network. This configuration of the second virtual cabling engine allows said second virtual cabling engine and the first virtual cabling engine to exchange data and information with each other. A technical effect of the configuring the second virtual cabling engine is that the one or more devices that are connected to the one or more ports of the second virtual cabling engine through the one or more cables can communicate with the first virtual cabling engine, through the second virtual cabling engine, which enables the controlling unit to manage and control the one or more devices arranged in the connected site, as per requirement.

Throughout the present disclosure, the term "*first probe message*" refers to a packet of data that is sent from the first virtual cabling engine to the second virtual cabling engine to ascertain at least one of: a connectivity, a functionality, a state of the one or more devices connected with the one or more ports of the second virtual engine. Herein, the first device is any device in the one or more devices that is connected to the first port. Herein, the first probe message comprises at least one of: a diagnostic message, an exploratory message, which is used to determine at least one of: an availability, a status, a characteristic of the first device in the connected site. Subsequently, the first probe message is forwarded to the first device that is connected to the first port via a cable of the one or more cables, wherein the first probe message is forwarded after protocol conversion. The first probe message could be in a form of, but not limited to, a query, an instruction, and a command. Continuing in reference with the first example, the first port may be the Port 1 of the second virtual cabling engine, and the first device may be the first heater. The first probe message may be sent to the Port 1. However, the first probe message may be intended to be forwarded to the first heater. Due to the error during the installation, the Port 1 forwards the first probe message to the second temperature sensor instead. Hence, the first probe message may be an instruction related to controlling the first heater i.e., "*Set temperature to 17 degrees Celsius",* which is related to adjusting a temperature of the first room to 17 degrees Celsius.

In an embodiment, sending the first probe message comprises at least one of: sending a heartbeat message, or sending a discovery message. The term "*heartbeat message*" refers to the diagnostic message that is sent periodically (for example, such as at a time interval lying in a range of 3-60 seconds) from the first virtual cabling engine, wherein the heartbeat message is used to monitor and/or synchronize a connection of the first device with the first port of the second virtual cabling engine. A technical effect of sending the heartbeat message is that it is used to determine whether the first port and/or the first device is operational and connected. Moreover, the term "*discovery message*" refers to the exploratory message that is sent from the first virtual cabling engine to identify and locate for devices available in the connected site, if the available devices are not connected to the one or more ports of the second virtual cabling engine. A technical effect of sending the discovery message is that the cable network can be dynamically updated based on the available devices located within the connected site.

Sending the first probe message comprising either a heartbeat message or a discovery message enhances the flexibility and functionality of the system in establishing and maintaining network connections. This improves interoperability, reduces the need for extensive physical cabling, and facilitates efficient automatic configuration and management of network connections between devices and the BMS. Using different types of probe messages allows the system to support a wide range of devices and protocols. to maintain continuous network connectivity and operational status (heartbeat message) and to dynamically identify and configure new or existing devices (discovery message). By continuously monitoring and dynamically discovering devices, the system ensures a reliable and efficient network setup. Dynamic monitoring and discovery reduce the need for extensive manual configurations and additional cabling, simplifying the network setup. Sending the first probe message comprising at least one of sending a heartbeat message, or sending a discovery message ensures that the network can dynamically manage device connections, monitor their status, and discover new devices, all of which are crucial for maintaining a robust and efficient network.

Heartbeat messages help in continuously monitoring the network status, ensuring that all devices remain connected and operational. Heartbeat messages ensure that all devices remain connected and operational, enabling prompt detection and resolution of connectivity issues. When the first virtual cabling engine sends periodic heartbeat messages to devices and if a device fails to respond, the system can take corrective action, such as generating an alert or remaking routing rules. For example, the first virtual cabling engine may send a heartbeat message every few seconds to a temperature sensor. If the sensor fails to respond, the system generates an alert and reroutes data to maintain network integrity.

Discovery messages enable the system to identify and integrate new devices automatically, reducing the need for manual configuration and additional cabling. The use of probe messages streamlines the process of establishing and maintaining network connections, enhancing overall efficiency. Discovery messages allow the system to identify and integrate new devices without manual intervention, streamlining the configuration process. When the first virtual cabling engine sends discovery messages to identify devices in the network, the responses provide information about the devices' types, statuses, and configurations, enabling automatic integration into the network. For example, when a new humidity sensor is added to the network, the first virtual cabling engine sends a discovery message. The sensor responds with its type and configuration details, allowing the system to automatically integrate it into the network.

In another embodiment, sending the first probe message comprises sending an identification signal, a type detection signal, a configuration signal, or a discovery signal. A technical effect of sending the first probe message in such a manner is that the first virtual cabling engine communicates particular details and/or requests to the second virtual cabling engine, which facilitates configuring the one or more devices, analysis of the communication network, and operation of the one or more devices in the connected site. The term "*identification signal*" refers to a data which is used to identify the first virtual cabling engine, that facilitates the first device to recognise an origin of the first probe message. Such identification signals could be different (i.e., unique) for each of the one or more devices. Examples of the identification signal may include, but are not limited to a device identifier, an Internet Protocol (IP) address, and a Media Access Control (MAC) address. The term "*type detection signal*" refers to a signal that is used to determine a type of the first device, which is used by the first virtual cabling engine to determine a characteristic of the first device. The term "*configuration signal*" refers to a signal that carries information about a setup and/or a configuration of the first device. Herein, the information could include at least one of: a setting, a parameter, a preference, related to an operation of the first device. The term "d*iscovery signal*" refers to a signal used to gather information about regarding other devices available in the connected site, that are not yet a part of the cable network (for example, such as the second heater in reference with the first example). The discovery signal could also be used to at least one of: determine the available devices that are not connected to the one or more ports of the second virtual cabling engine, determine capabilities of the available devices, determine a role of the available devices in the communication network.

Sending the first probe message can involve sending an identification signal, a type detection signal, a configuration signal, or a discovery signal. This enhances the method by providing detailed information about the devices, and enabling more accurate and efficient network configuration and management. These signals provide detailed information necessary for accurate device identification and configuration, ensuring seamless integration and operation within the network. This enhances interoperability, reduces the need for extensive physical cabling, and facilitates efficient automatic configuration and management of network connections between devices and the BMS. Sending specific signals allows the system to accurately identify and configure a wide range of devices from different vendors. Detailed device information reduces the need for manual configuration and additional cabling by automating the setup process. Using specific probe messages streamlines the process of establishing and maintaining network connections, improving overall efficiency. It further helps to gather detailed information about the devices, ensuring accurate identification, configuration, and integration into the network; it ensures that devices are correctly identified and configured, preventing miscommunication and configuration errors. Automating the identification and configuration process reduces setup time and ensures optimal network performance. Using specific signals allows the system to handle devices from various manufacturers with different communication protocols, enhancing overall interoperability. The system can dynamically adjust configurations based on the detailed information received, ensuring the network remains efficient and reliable.

The embodiment, wherein the system sends an identification signal to the device, which responds with a unique identifier, helps in uniquely identifying the device in the network. For example, the first virtual cabling engine sends an identification signal to a lighting control unit, which responds with its unique ID. The system then uses this ID to apply specific configuration settings.

The embodiment, wherein the system sends a type detection signal, and the device responds with its type information, allows the system to apply appropriate settings. For example, the system sends a type detection signal to a newly added humidity sensor. The sensor responds with its type, and the system automatically configures the appropriate communication protocols.

The embodiment, wherein the system sends a configuration signal, and the device responds with its configuration details, ensures it is correctly integrated into the network. For example, the system sends a configuration signal to an HVAC unit, which responds with its current configuration settings. The system verifies these settings and adjusts them if necessary.

The embodiment, wherein the system sends a discovery signal, and the device responds with detailed information about its capabilities, enables automatic integration and configuration. For example, the system sends a discovery signal to a newly installed security camera. The camera responds with details about its capabilities, such as resolution and network settings, allowing the system to integrate it seamlessly.In yet another embodiment, sending the first probe message comprises sending a device type test message, a device connection test message, or a device functionality test message. A technical effect of the sending the first probe message in such a manner is that said first probe message is used to assess different aspects of the first device, for example, such as, a status, a connectivity, a capability of the first device. The term "*device type test message*" refers to a message sent from the first virtual cabling engine to determine a category and/or a type of the first device. Furthermore, the device type test message enables identification of a kind of the first device that the first virtual cabling engine communicates with. The term "*device connection test message*" refers to a message sent from the first virtual cabling engine to verify a connection between the first virtual cabling engine and the first device. The device connection test message is used to identify which cable of the one or more cables is operational, and whether said cable is used to provide connection of the first device with the first port. The term "*device functionality test message*" refers to a message that is used to assess an operational capability of the first device. The device functionality test message could comprise queries or commands related to the operational capability of the first device.

Throughout the present disclosure, the term "*first reply*" refers to a response or an answer to the first probe message from the first device. The first reply could comprise information relevant to the first probe message. The first reply is received at the first port of the second virtual cabling engine via the cable of the one or more cables. Then, the first reply is forwarded to the first virtual cabling engine from the second virtual cabling engine via the communication network. Optionally, the first reply is sent in a form of at least one of: a data packet, a network message, a payload, a binary data, a structured protocol, an encoded message. The form of the first reply is chosen in such a manner such that the first reply is accurately transmitted, and is received and interpreted in an accurate manner by the first virtual cabling engine. Continuing in reference with the first example, the first reply received from the first device in reply to the instruction "*Set temperature to 17 degrees Celsius*" may be an error or no reply, as the second temperature sensor is connected with the Port 1 instead of the first heater.

Throughout the present disclosure, the term "*first incident response*" refers to a reaction of the first virtual cabling engine in response to the first reply received by the first virtual cabling engine. Herein, the first incident response could be a predefined set of actions and/or a predefined set of procedures undertaken by the first virtual cabling engine in response to the first reply. In this regard, the first virtual cabling engine processes the first reply in order to determine the first incident response that is appropriate based on the first reply. Continuing in reference with the first example, the first incident response generated by the first virtual cabling engine upon receiving the error or no reply may be that the Port 1 is not connected to the first device. The first virtual cabling engine is configured to generate the first incident report as follows. The first virtual cabling engine receives the first reply. In reaction to the first reply, the first virtual cabling engine produces a first incident response. The first incident response is determined by how the first virtual cabling engine processes the first reply. This means the engine evaluates the content of the first reply. This first incident response may be a predefined set of actions or procedures that the engine follows in response to the reply it has received. If the first virtual cabling engine gets an error message or no reply at all as its first reply, then the first incident response it may generate is the conclusion or status update that e.g., the Port is not connected to the first device. So, the first virtual cabling engine generates the first incident report by receiving and processing the first reply, determining the appropriate response based on predefined sets of actions and/or procedures relative to the content of the reply and taking the necessary action or providing an update (like the one about "Port 1") based on its processing of the reply.

Sending the first probe message can involve sending a device type test message, a device connection test message, or a device functionality test message. This enhances the method by providing a comprehensive approach to testing and validating the device's type, connectivity, and functionality. By enabling detailed testing and validation of devices, enhances interoperability, reduces the need for extensive physical cabling, and facilitates efficient automatic configuration and management of network connections between devices and the BMS.

Detailed testing ensures that devices from various vendors and with different protocols are correctly identified and integrated. Validating device connectivity and functionality ensures that all devices are operational and correctly configured, enhancing overall network reliability. Automated testing reduces the need for manual configuration and physical adjustments, simplifying the network setup. The use of test messages streamlines the process of establishing and maintaining network connections, improving overall efficiency. Gathering detailed information about the devices thus ensures accurate identification, connectivity, and functionality, which are essential for optimal network configuration and management.

In the embodiment, wherein the system sends a message to the device to identify its type, the device responds with information about its category, such as sensor or actuator. This ensures that devices are correctly identified and categorized, preventing miscommunication and configuration errors. For example, the first virtual cabling engine sends a type test message to a newly added lighting control unit, the unit responds with its type information, allowing the system to configure it correctly as a lighting control device.

In the embodiment, wherein the system sends a message to verify the device's connectivity, the device responds with its connection status, confirming if it is properly connected to the network. Verifying device connectivity ensures that all devices are properly connected to the network, preventing connectivity issues. For example, the system sends a connection test message to a temperature sensor, the sensor responds with its connectivity status, confirming if it is properly connected to the network.

In the embodiment, wherein the system sends a message to assess the device's functionality, the device responds with data on its operational capabilities, such as temperature readings or actuator movements. Assessing device functionality ensures that all devices are operational and performing their intended functions, enhancing network reliability. For example, the system sends a functionality test message to an HVAC unit, the unit responds with data on its operational capabilities, such as temperature settings and airflow levels, ensuring it is functioning correctly.

Optionally, generating the first incident response comprises remaking routing rules or generating an alert. The term "*routing rules*" refers to predefined instructions that determine how information is directed between the first virtual cabling engine, the second virtual cabling engine, and the one or more devices, within the cable network. Hence, when generating the first incident response, the routing rules are adjusted based on the first reply, in order to redirect the information in a different manner. A technical effect of remaking the routing rules is that any error that could have occurred during installation of the cable network can be corrected and a correct route is made to facilitate communication between the first virtual cabling engine and the one or more devices. The term "*alert*" refers to a notification sent to relevant parties to inform them about a particular event or a particular condition in the cable network. The alert could be in a form of, but not limited to, a message, an audio signal, a visual signal, a light signal, and similar. A technical effect of generating the alert is that whenever any of the one or more devices is not connected with a correct port of the one or more ports of the second virtual cabling engine, and/or not connected with any of the one or more ports, it can be brought into notice to facilitate taking necessary action for rectification. Thus, in this way any misconfiguration or error that occurred during the initial setup or changes in the cable network can be corrected. By adjusting the rules, communication paths can be optimized or corrected to ensure smooth and accurate data transmission between the cabling engines and the connected devices. If there's an error that can't be rectified by remaking the routing rules or if there's another significant issue, the system is configured to generate an alert to inform the relevant personnel or systems about the issue, prompting further investigation or action. For instance, if a device isn't connected to the correct port or isn't connected at all, the alert would bring this to attention, allowing for timely rectification.

By specifying that generating the first incident response can involve remaking routing rules or generating an alert enhances the system's ability to adapt and respond to various network conditions dynamically. Generating the first incident response by remaking routing rules or generating an alert comprises adjusting the network configuration or notifying relevant personnel in response to the incident detected to ensure the network remains functional, efficient, and reliable by dynamically addressing and resolving issues as they arise. By remaking routing rules, the system can adapt to changes and optimize the network configuration. Generating alerts allows for prompt identification and resolution of issues, improving network reliability and performance. Dynamic adjustments and automated alerts reduce the need for manual interventions and physical adjustments, streamlining the network setup and management.

Dynamic routing adjustments and timely alerts are crucial for maintaining network efficiency, reliability, and performance. The system can reconfigure the pathways through which data is transmitted within the network to optimize performance or resolve issues. If an issue is detected that cannot be resolved through automatic configuration, the system can generate an alert to notify network administrators for manual intervention.

Remaking routing rules allows the system to optimize data flow, improving overall network performance. By generating alerts for issues that require manual intervention, the system ensures prompt resolution of problems, enhancing reliability. Dynamic adjustments and proactive alerts reduce the need for manual network reconfigurations and troubleshooting, saving time and resources.

For example, if a device's status changes (e.g., goes offline), the system can automatically reroute data through alternative pathways to maintain network integrity and performance. If a device fails to respond to probe messages or presents a configuration mismatch, the system can generate an alert to notify network administrators, ensuring timely troubleshooting and resolution.

Generating the first incident response by remaking routing rules or generating an alert enhances the system's ability to dynamically adapt and respond to various network conditions. This introduces a proactive approach to managing network issues, ensuring that any misconfigurations or errors are promptly addressed. The system's ability to automatically adjust routing rules or generate alerts, ensuring continuous and optimal performance without manual intervention, provides a surprising technical effect. This dynamic and automated response to network conditions significantly reduces downtime and improves reliability, offering an unexpected level of efficiency and effectiveness compared to conventional network management systems.

Optionally, the computer-implemented method comprises: (vii) analysing the first incident response to find out at least one of: a type, a status, or a configuration of the first device. Herein, the means (for example, such as the processor) of the data processing system is used to analyse (in other words, review) the first incident response. A technical effect of analysing the first incident response is that said analysis is used to at least gain insights regarding the first device, the first port, the cable connecting the first device with the first port, and/or an environment of the first device. Beneficially, the analysis helps in at least one of: understanding the first device, determining a connectivity of the first device with the first port via the cable, identifying an issue which triggered the first incident response. Hence, this facilitates the first virtual cabling engine in making informed decisions regarding configuring the cable network, as the means is configured to accurately identify and classify the first device. Such informed decisions enhance diagnostic capabilities when configuring the cable network. Optionally, the means analyses the first incident response to determine the type of the first device, wherein the term "*type*" refers to any one of: a category, a classification of the first device. Examples of the type of the first device may include, but are not limited to, a cooling device, a heating device, a sensing device, a regulating device, an input device, an output device, a monitoring device, and a recording device. In a third example, the type may indicate that the first device may be a cooling device. Optionally, the means analyses the first incident response to determine the status of the first device, wherein the term "*status*" refers to an operational state and/or a functional state of the first device. The status could indicate whether the first device is online, offline, unavailable, busy, inactive, and the like. Optionally, the means analyses the first incident response to determine the configuration of the first device, wherein the term "*configuration*" refers to a functional arrangement of the first device. Herein, the configuration could comprise at least one of: a setting, a parameter that the first device is using and was mentioned in the first incident response.

This embodiment involves processing the incident response received from the first device to extract useful information about the device's type, status, or configuration. Knowing the type, status, or configuration of a device is crucial for correctly integrating it into the network, ensuring it operates as intended, and for troubleshooting any issues that arise. The first virtual cabling engine processes the reply from the device. This may involve parsing the response to extract data fields that indicate the device's type (e.g., sensor, actuator), its operational status (e.g., online, offline, malfunctioning), and its configuration settings (e.g., communication parameters). The purpose of this analysis is to gather detailed information that will enable the system to manage the device effectively, ensuring it can communicate properly with other devices and the BMS.

Analysing the first incident response further improves the system's ability to accurately identify and manage connected devices, which in turn supports better interoperability and reduces the need for manual configuration and troubleshooting. By analysing the incident response, the system can determine key characteristics of the connected devices, leading to more precise and effective management. Identifying the type and configuration of devices helps in adapting the system to handle different protocols and standards, thus improving interoperability. Accurate identification and configuration reduces the need for physical interventions and additional cabling, as the system can dynamically manage connections. Automated analysis streamlines the configuration process, reducing manual efforts and potential errors.

If the incident response indicates that the device is e.g., a temperature sensor, the system can apply the appropriate configuration settings and communication protocols specific to temperature sensors. If the response shows that the device is offline or malfunctioning, the system can generate an alert or attempt to re-establish the connection. The response may include configuration data such as IP addresses or port settings, which the system can use to ensure the device is correctly integrated into the network.Optionally, the computer-implemented method further comprises: (viiiA) confirming if the first device is of: a first type, has a first status and/or has a first configuration, and if the confirmation is positive, configuring the first virtual cabling engine to route messages between the controlling unit and the first device of the first type or first status or the first configuration via the first port.

Herein, the first type is any one of: an actual category, an actual classification of the first device. The first status represents a current operational state and/or a current functional state of the first device. The first configuration is an actual functional arrangement of the first device. The confirmation is determined by the means, wherein the means compares the at least one of: the type, the status, the configuration of the first device as mentioned in the first incident report with the corresponding at least one of: the first type, the first status, the first configuration, of the first device. When the at least one of: the type, the status, the configuration of the first device, matches with corresponding at least one of: the first type, the first status, the first configuration, of the first device, the means provides a positive confirmation. This means that the first device is connected with the first virtual cabling engine. Hence, the first virtual cabling engine is configured to establish a connection between the first device and the controlling unit. The first virtual cabling engine is configured by adjusting the setting, the parameter of the first virtual cabling engine, and similar. This facilitates the controlling unit to control an operation of the first device as per requirement, in a wireless manner. A technical effect is that due to the wireless connection of the controlling unit with the first device, a number of physical cables that would have been conventionally used, is now reduced. Another technical effect of such confirmation is that the first virtual cabling engine is configured in a dynamic manner which is conditional in nature, to facilitate communication between the controlling unit and the first device. This enables targeted and efficient routing of messages, thereby ensuring that communication between the controlling unit and the first device are correctly directed based on attributes (i.e., the first type, the first status and/or the first configuration) of the first device.

By verifying the information obtained from the device (type, status, configuration) and, if the information matches expected criteria, setting up the virtual cabling engine to facilitate communication between the device and the controlling unit ensures that the device is correctly identified and that the system can handle its communication needs appropriately. The virtual cabling engine compares the device's type, status, or configuration against predefined criteria. If the device matches the expected type, status, or configuration, the engine sets up routing rules to enable communication between the device and the controlling unit. The purpose is to ensure that only correctly identified and compatible devices are integrated into the network, enhancing reliability and performance. Accurate configuration prevents miscommunication and operational issues. It further enhances interoperability, reduces the need for extensive physical cabling, and automating the configuration and management processes.

By confirming device details, the system ensures that the device is correctly identified and configured, preventing miscommunication or configuration errors. Correct identification and configuration allows seamless integration of devices from various vendors, supporting multiple communication protocols. Precise configuration reduces the need for additional cabling and manual adjustments, streamlining the physical setup. The automated confirmation and configuration process minimizes manual intervention and potential errors, leading to a more efficient network management system.

For example, if a device is identified as a temperature sensor and matches the expected criteria, the system configures the virtual cabling engine to route temperature-related data to the controlling unit. If a device is confirmed to be online and operational, the system sets up communication channels to monitor and control the device as needed. If a device's configuration matches the required settings (e.g., correct IP address, communication protocol), the system ensures proper data routing and command execution.

Alternatively, optionally, the computer-implemented method comprises: (viiiB) confirming if the first device is of: a first type, has a first status and/or has a first configuration and if the confirmation is negative, sending the first probe message to another port than previously probed port or ports of the second virtual cabling engine to be forwarded to the first device and repeating computer-implemented method from step (v) forward until the confirmation is positive.

Herein, when the means provides the negative confirmation, that means the first device is not connected to the first port of the second virtual cabling engine. In other words, when the means provides the negative confirmation, it means that the at least one of: the type, the status, the configuration of the first device matches with the corresponding at least one of: the first type, the first status, the first configuration, of the first device. Hence, the first probe message is sent from the first virtual cabling engine to another port of the second virtual cabling engine, wherein the another port is determined from remaining ports of the second virtual cabling engine. Herein, the previously probed port is the first port. Subsequently, the first probe message is forwarded to the first device in a manner as previously described, via the another port of the second virtual cabling engine. A technical effect of sending the first probe message to another port is that it facilitates in correctly determining which port of the second virtual cabling engine the first device is connected to. Another technical effect of sending the first probe message to another port in such a manner is that it enhances an adaptability and accuracy of configuring the cable network, as sending the first probe message to another port upon negative confirmation ensures comprehensive identification of the first device. A technical effect of repeating the computer-implemented method from step (v) forward until the confirmation is positive is that such repetition systematically narrows down a correct port to which the first probe message is to be forwarded. This improves a reliability and efficiency of the cable network in a dynamic manner. Continuing in reference with the first example, the first incident response may be analysed to find out that the type of the first device may be the second temperature sensor. However, the first type may be the first heater. Hence, the confirmation is negative.

A technical effect of determining at least one of: the type, the status, the configuration of the first device, then further determining whether or not the first device is of: the first type, has the first status and/or the first configuration is that it significantly reduces a number of physical cables required for establishing communication between the controlling unit with the first device. Furthermore, processing resources and time required for establishing the communication is also significantly reduced. Furthermore, there is facilitation of automatic configuration of the one or more cables of the one or more devices with the one or more ports of the second virtual cabling engine. Such facilitation of automatic configuration of the one or more cables ensures that the one or more devices are connected in a required manner with the first cabling engine, even in instances where there is any error during installation.

This embodiment comprises checking if the device matches the expected type, status, or configuration. If not, the system sends the probe message to another port and repeats the verification process until a positive confirmation is achieved. This is crucial for ensuring that devices are correctly identified and configured, even if initial attempts fail. It prevents misconfigurations and ensures that all devices are accurately integrated into the network. The system initially probes a port and checks the response. If the response does not match the expected criteria, the system sends the probe message to a different port and repeats the process until the device is correctly identified and confirmed. The purpose is to ensure robust and accurate device identification and configuration, facilitating seamless integration into the network.

If the device does not match the expected criteria, the method involves sending the probe message to another port and repeating the verification process until a positive confirmation is achieved. By systematically probing different ports, the method ensures accurate identification of the device's type, status, and configuration. The ability to correctly identify and configure devices from various ports ensures that devices from different vendors and with different protocols are supported. Automating the process of retrying different ports reduces the need for manual troubleshooting and intervention. The automated retry mechanism streamlines the setup process, ensuring that devices are correctly configured without extensive physical adjustments or cabling changes.

This ensures robust identification and configuration of devices, even when initial attempts fail. This enhances interoperability by ensuring that all devices are correctly identified and configured, reduces the need for extensive physical cabling by automating the troubleshooting process, and facilitates automatic configuration and management by enabling the system to dynamically adjust and correct connections. This approach further ensures that all devices are correctly identified and configured, even in the case of initial failures. The system can dynamically adjust and correct connections without requiring manual intervention, reducing errors and setup time. Automating the retry process streamlines the configuration, ensuring that devices are properly integrated without extensive manual effort.

For example, if a device is initially connected to the wrong port, the system will detect the mismatch and probe other ports until the correct port is identified. In environments where devices are frequently moved or reconfigured, this method ensures that devices are always correctly identified and configured, adapting to changes seamlessly.

Optionally, the computer-implemented method further comprises:
sending from the first virtual cabling engine a second probe message to a second port of the second virtual cabling engine to be forwarded to a second device of the one or more devices in the connected site;
receiving from the second device, via the second virtual cabling engine a second reply to the second probe message; and
generating by the first virtual cabling engine based on the second reply a second incident response; and
analysing based on the first incident response and based on the second incident response at least one of: a type, a status, a configuration of the first device and the second device and a compatibility of the first device and the second device with each other.

A technical effect is to correctly establish a connection of the one or more devices with the first virtual cabling engine. Herein, the second probe message that is sent to the second port of the second virtual cabling engine is different from the first probe message that was sent to the first port of the second virtual cabling engine. A form of the second probe message could be similar to or different from the form of the first probe message. Herein, the second probe message comprises at least one of: another diagnostic message, another exploratory message, which is used to determine at least one of: another availability, another status, another characteristic of the second device in the connected site. The second probe message is forwarded to the second device that is connected to the second port via another cable of the one or more cables that connects the second device with the second port, wherein the second probe message is forwarded after another protocol conversion.

Optionally, the second probe message comprises at least one of: sending another heartbeat message, sending another discovery message. Optionally, sending the second probe message comprises sending another identification signal, another type detection signal, another configuration signal, or another discovery signal. Optionally, sending the second probe message comprises sending another device type test message, another device connection test message, or another device functionality test message.

Subsequently, the second device sends the second reply in response to the second probe message, to the second virtual cabling engine. The second reply could comprise information relevant to the second probe message. The second reply is received at the second port of the second virtual cabling engine via the another cable of the one or more cables. Then, the second reply is forwarded to the first virtual cabling engine from the second virtual cabling engine via the communication network. The form of the second reply could be similar to or different from a form of the first reply. The form of the second reply is chosen in such a manner such that the second reply is accurately transmitted, and is received and interpreted in an accurate manner by the first virtual cabling engine.

Herein, the term "*second incident response*" refers to another reaction of the first virtual cabling engine in response to the second reply received by the first virtual cabling engine. The second incident response could be similar to or different from the first incident response. Moreover, the second incident response could be another predefined set of actions and/or another predefined set of procedures undertaken by the first virtual cabling engine in response to the second reply. In this regard, the first virtual cabling engine processes the second reply in order to determine the second incident response that is appropriate based on the second reply.

Subsequently, the means of the data processing system is used to analyse the first incident response and the second incident response. A technical effect of analysing the first incident response and the second incident response is that said analysis is used to at least gain insights regarding the first device and the second device, the first port and the second port, the cable and another cable connecting the first device with the first port and the second device with the second port respectively, an environment of the first device and the second device. Beneficially, the analysis helps in at least one of: understanding the first device and the second device, determining a connectivity of the first device with the first port via the cable of the one or more cables, determining a connectivity of the second device with the second port via the another cable of the one or more cables, identifying an issue which triggered the first incident response and the second incident response. Hence, this facilitates the first virtual cabling engine to make informed decisions regarding management of the first device and the second device and the cable network. Optionally, the means analyses the first incident response and the second incident response to determine the type of the first device and the second device, wherein any one of: another category, another classification of the first device and the second device is determined. Optionally, the means analyses the first incident response and the second incident response to determine the status of the first device and the second device, wherein another operational state and/or another functional state of the first device and the second device is determined.

Optionally, the means analyses the first incident response and the second incident response to determine the configuration of the first device and the second device, wherein another functional arrangement of the first device and the second device is determined. Herein, the configuration could comprise at least one of: another setting, another parameter, of the first device and the second device. Optionally, the means analyses the first incident response and the second incident response to determine the compatibility of the first device and the second device with each other. Herein, the compatibility of the first device and the second device with each other to determine how effectively the first device and the second device interact with each other, and whether any issues are encountered when the first device and the second device work with each other.

According to this embodiment, the method enhances the robustness of the configuration and management system. It addresses not just the configuration of a single device but also the analysis of multiple devices and their compatibility. It ensures comprehensive device identification and compatibility analysis, which enhances interoperability, reduces the need for extensive physical cabling, and facilitates automatic configuration and management of network connections between multiple devices and the BMS. More specifically, it ensures that multiple devices are correctly identified and configured, reducing the risk of misconfiguration. By analysing the compatibility between devices, the system can optimize network performance and prevent potential issues. It reduces manual intervention and streamlines the configuration process for multiple devices, saving time and resources.

By probing and analysing multiple devices, the system can ensure that all devices are correctly identified and configured. The method supports devices from various vendors and with different communication protocols, ensuring seamless integration. Automating the process for multiple devices minimizes the need for manual configuration and additional cabling. The ability to analyze compatibility between devices improves network performance and reliability.

Sending a second probe message to a second port of the second virtual cabling engine to be forwarded to a second device ensures that the system can identify and manage multiple devices within the network, enhancing overall system robustness. This enables to identify and gather information about the second device for accurate configuration.

The step of receiving from the second device a second reply to the second probe message confirms the connectivity and operational status of the second device. The second device sends a reply through the second virtual cabling engine to the first virtual cabling engine. This step enables to obtain information necessary for configuring the second device.

The step of generating by the first virtual cabling engine based on the second reply a second incident response involves generating an incident response based on the reply from the second device. It facilitates automated handling of the second device's configuration or any detected issues. The first virtual cabling engine processes the second reply and generates an appropriate response to ensure correct configuration and integration of the second device.

The step of analyzing the first and second incident responses to determine type, status, configuration, and compatibility involves analyzing the incident responses from both devices to determine their types, statuses, configurations, and compatibility. It ensures that both devices are correctly identified and compatible, improving network interoperability and performance. The first virtual cabling engine compares and analyzes the incident responses to extract relevant information to facilitate accurate and efficient network configuration and management.

For example, if the second device is a humidity sensor and the first device is a temperature sensor, the system can configure the network to handle both types appropriately and analyse their combined impact on the network. If one device is online and operational while another is malfunctioning, the system can generate alerts and reconfigure the network to maintain optimal performance.

The method according to this embodiment enhances the robustness of the configuration and management system by sending a second probe message to another device and analysing responses from multiple devices to determine their types, statuses, configurations, and compatibility. This ensures comprehensive device identification and compatibility analysis, which enhances interoperability, reduces the need for extensive physical cabling, and facilitates automatic configuration and management of network connections between multiple devices and the BMS. Its ability to manage interactions and compatibility between devices from different vendors with potentially different protocols, ensuring seamless communication and optimal network performance, provides an unexpected technical effect. This capability significantly reduces the risk of misconfiguration and manual intervention, providing a surprising improvement over traditional systems that typically struggle with interoperability issues.

Optionally, the computer-implemented method further comprises configuring the first virtual cabling engine based on the first reply if the first reply corresponds to a recognized device signature. A technical effect of configuring the first virtual cabling engine in such a manner is that a function and/or behaviour of the first virtual cabling engine is dynamically configured based on characteristic of the recognized device signature. Herein, the term "*device signature*" refers to an identifier or a pattern that is associated with a particular type of device of the one or more devices. The first virtual cabling engine processes the first reply to determine whether the first reply comprises the recognized device signature. When the first reply corresponds to the recognized device signature, the first virtual cabling engine is configured by at least one of: adjusting how the first virtual cabling engine interacts with a recognized device having the recognized device signature, managing the one or more cables involving the recognized device. Furthermore, based on the recognized device signature, the first virtual cabling engine could set up particular communication protocols to enable at least one of: communication between the recognized device and the first virtual cabling engine, manage the one or more cables of the device connected to the one or more ports of the second virtual cabling engine, features as per requirements of the device.

According to this embodiment, the method enhances the automatic identification and configuration of devices based on pre-known device characteristics. To automate the identification and configuration process, it reduces the need for manual setup and ensuring that the system can handle a diverse range of devices.

Recognizing device signatures allows the system to support a wide range of devices from different vendors and with different protocols. By automatically identifying and configuring devices based on recognized signatures, the system reduces the need for manual adjustments and additional cabling. The use of device signatures streamlines the configuration process, ensuring devices are correctly set up without extensive manual intervention.

Recognizing device signature based on the first reply comprises identifying the device based on a recognized signature in the reply received from the device. Recognizing device signatures ensures accurate identification and configuration of devices, which is crucial for seamless integration and operation within the network. When the first virtual cabling engine receives a reply from a device, it compares the reply to a database of known device signatures. If a match is found, the device is automatically recognized and configured accordingly.

By ensuring that the devices are correctly identified and configured, prevents miscommunication and configuration errors. Automating the recognition and configuration process reduces setup time and ensures optimal network performance. Recognizing device signatures allows the system to handle devices from various manufacturers with different communication protocols, enhancing overall interoperability.

For example, if a temperature sensor from a specific manufacturer sends a reply that matches a known signature, the system can automatically apply the correct configuration settings for that device. For proprietary devices with unique communication protocols, recognizing the device signature ensures that the system can translate and handle the communication correctly, facilitating seamless integration.

Optionally, the computer-implemented method further comprises measuring an environmental parameter of a first room of the connected site with a measurement device. Herein, the term "*environmental parameter*" refers to information regarding an internal state of the first room, and/or a state of surroundings of the first room. The environmental parameter is measured using the measurement device, wherein the term "*measurement device*" refers to a specialised equipment that is designed to capture data related to the environmental parameter. The measurement device is placed within the first room and/or in a vicinity of the first room. Examples of the environmental parameter may include, but are not limited to, a temperature, a humidity, an air quality, a light intensity, and a sound intensity. Examples of the measurement device may be, but are not limited to, a thermometer, a hygrometer, an anemometer, a spectroradiometer, a light sensor, and a camera. A technical effect of measuring the environmental parameter of the first room to determine a current state of the environmental parameter in the first room, which will help in making deductions at a later stage.

Measuring an environmental parameter of a first room of the connected site with a measurement device comprises using a measurement device to monitor an environmental parameter in a specific room within the connected site to ensure that devices are configured and operate optimally within their specific environmental conditions. This enhances overall network performance and reliability. By incorporating the measurement of an environmental parameter in a room of the connected site using a measurement device enhances the system's capability to monitor and manage environmental conditions as part of the overall network configuration and management strategy. This enhances interoperability by ensuring devices interact correctly with their environment, reduces the need for physical cabling by leveraging wireless communication and automated data collection, and facilitates efficient automatic configuration and management of network connections between devices and the BMS.

Environmental parameters, such as temperature, humidity, or air quality, can significantly impact the performance and operation of devices. Monitoring these parameters ensures devices are configured to operate optimally in their environment. A measurement device (e.g., a thermometer, hygrometer, air quality sensor) is placed in the room to continuously monitor the chosen environmental parameter. The data collected is then used to adjust the configuration of the network and connected devices.

By monitoring environmental parameters, devices can be configured to operate optimally within their specific environmental context, improving overall system integration. Continuous environmental monitoring allows for dynamic adjustments to device configurations based on real-time environmental data, enhancing network reliability and performance.

Wireless measurement devices reduce the need for additional cabling, simplifying installation and maintenance. Integrating environmental data into the configuration process allows for more accurate and efficient network management, ensuring devices operate optimally in their specific environments.

By taking environmental conditions into account, devices can be configured more accurately, ensuring optimal operation. Continuous monitoring allows the system to adapt configurations dynamically in response to changing environmental conditions. Ensuring devices operate within their optimal environmental parameters improves their performance and lifespan. Automating the collection and use of environmental data reduces the need for manual adjustments and configurations, streamlining network management.

For example, the thermometer measures the temperature in a room, if the temperature exceeds a certain threshold, the system can adjust the settings of HVAC units to maintain optimal conditions. For example, the hygrometer measures the humidity levels, if the humidity is too high or too low, the system can configure dehumidifiers or humidifiers to achieve desired levels, ensuring the proper operation of sensitive electronic devices. For example, the air quality sensor detects levels of pollutants or particulates, if poor air quality is detected, the system can activate air purifiers or adjust ventilation settings to improve air quality.

In an embodiment, the computer-implemented method further comprises sending a query message to at least one device in the first room and comparing a reply to the query message with the measured environmental parameter of the first room and use the comparison to verify if the at least one device is in the first room or not. In this regard, the data captured using the measurement device related to the environmental parameter is compared with the reply to the query message, in order to determine whether the at least one device is present in the first. Herein, the first virtual cabling engine send the query message to at least one device in the first room via the second virtual cabling engine. The query message could comprise a query regarding a particular environmental parameter that can be used to determine whether the at least one device is available in the first room. The at least one device responds with a reply to the query message, wherein the reply comprises information related to their current environmental status. This reply is received by the first virtual cabling engine. The first virtual cabling engine compares the reply received from the at least one device with the measured environmental parameter. Such comparison enables validating a presence of the at least one device within the first room. In an instance, when the reply matches the measured environmental parameter, that means the at least one device is present in the first room. In another instance, when the reply does not match the measured environmental parameter, that means the at least one device is not present in the first room. A technical effect of verifying the presence of the at least one device in the first room in such a manner is that a physical location of the at least one device can be identified, and informed decisions is made based on this information.

Sending the query message to at least one device in the first room and comparing the reply to the query message with the measured environmental parameter of the first room to verify if the device is in the room cpomprises a query message to a device in the room and comparing its response with the measured environmental parameter to verify the device's presence. This ensures accurate device identification and configuration by verifying that the device is located in the specified room, enhancing network reliability and performance. This further enhances the accuracy and reliability of device management and network configuration. By ensuring accurate verification of device presence and correct configuration within the network, enhances interoperability, reduces the need for extensive physical cabling, and facilitates efficient automatic configuration and management of network connections between devices and the BMS.

Verifying the presence of devices ensures that they are correctly identified and configured within the network, preventing misconfiguration and enhancing overall reliability. Accurate verification of device presence ensures that devices interact correctly with the network and other devices, improving overall system integration. Verifying device presence ensures that devices are correctly identified and configured within the network, enhancing management and reducing errors. Automating the verification process reduces the need for manual configuration, additional cabling, checks and adjustments. The ability to dynamically verify device presence and adjust configurations accordingly ensures efficient and reliable network management.

The system sends the query message to the device, requesting information that can be compared with the environmental parameter. The device responds with data (e.g., temperature readings from a sensor). The system compares this data with the measured environmental parameter to confirm the device's presence in the room.

In an example, the system sends a query message to a temperature sensor in the room. The sensor responds with the current temperature, which is compared to the measured temperature from the measurement device. If the readings match, the system confirms the sensor's presence in the room.

In another example, the system queries a humidity sensor. The sensor responds with humidity levels, which are compared to the measured levels in the room. A match verifies the sensor's presence.

In another example, the system sends a query to an air quality sensor. The sensor's response is compared to the measured air quality data, verifying the sensor's location in the room.

In another embodiment, the computer-implemented method further comprises sending a control message to at least one device in the first room and comparing the measured environmental parameter with effect associated to the control message and to verify if the at least one device is in the first room or not. Herein, the control message is sent from the first virtual cabling engine to the at least one device in the first room. In this regard, the effect associated with control message is compared with the measured environmental parameter. The control message comprises instructions to control the at least one device in the first room. This control message causes an effect on the at least one device or an environment in which the at least one device is arranged, within the first room. The first virtual cabling engine compares the effect associated with the control message with the measured environmental parameter. Such comparison enables validating a presence of the at least one device within the first room. In an instance, when the effect associated with the control message matches the measured environmental parameter, that means the at least one device is present in the first room. In another instance, when the effect associated with the control message does not match the measured environmental parameter, that means the at least one device is not present in the first room. A technical effect of verifying the presence of the at least one device in the first room in such a manner is that a physical location of the at least one device can be identified, and informed decisions is made based on this information.

Sending a control message to at least one device in the first room and comparing the measured environmental parameter with the effect associated with the control message to verify if the device is in the room comprises sending a control message to a device in the room and comparing the resulting effect on the measured environmental parameter to verify the device's presence and functionality.

The system sends a control message (e.g., an instruction to change the temperature) to the device. The system measures the environmental parameter before and after sending the control message and can dynamically verify and adjust configurations based on real-time responses to control messages, ensuring efficient and reliable network management. The resulting effect (e.g., a change in temperature) is compared to the expected effect to verify the device's presence and functionality. The purpose of this embodiment is to ensure accurate device identification, presence, and functionality by verifying that the device responds correctly to control messages, enhancing network reliability and performance. It ensures that devices are not only present but also functional and correctly configured, preventing miscommunication and configuration errors.

Verifying device presence and functionality through control messages ensures that devices interact correctly with the network and other devices, and thus enhances network reliability by ensuring all devices are operational and performing as expected. Sending control messages and observing their effects allows for more accurate verification of device presence and functionality, reducing configuration errors. Automating the verification process reduces the need for manual checks, configuration and adjustments and additional cabling and thus streamlines device configuration. The ability to dynamically verify device presence and functionality through control messages ensures efficient and reliable network management.

The method according to the embodiment comprises sending a control message to a device and comparing the resulting effect on the measured environmental parameter to verify the device's presence and functionality. This ensures that devices are not only present but also functional and correctly configured. Its ability to dynamically verify and adjust configurations based on real-time environmental responses, significantly enhancing the reliability and performance of the network, provides unexpected technical effect. This approach ensures that devices operate within their optimal environmental parameters, preventing failures and extending device lifespan. Such dynamic verification and adjustment are not typically found in traditional systems, making this a surprising and highly beneficial improvement.

In an example, the system sends a control message to an HVAC unit to adjust the temperature. The measured temperature change in the room verifies the HVAC unit's presence and functionality.

In another example, the system sends a control message to a smart lighting system to dim the lights. The change in light intensity verifies the presence and functionality of the lighting system.

In another example, the system sends a control message to an air ventilation system to increase airflow. The change in air quality parameters verifies the ventilation system's presence and functionality.

Optionally, the computer-implemented method further comprises forming a database of query-response pairs of probe messages and respective reply messages, and database of incident responses and incident response triggering rules based on the query-response pairs. Herein, the probe messages encompass namely, the first probe message and/or the second probe message. The reply messages encompass namely, the first reply (or, the first reply message) and/or the second reply (or, the second reply message). The incident responses encompass namely, the first incident response and/or the second incident response. A technical effect of forming the databases is that mapping of the one or more devices with the one or more ports in the connected site is available and can be used as per requirement. Herein, the term "*database*" refers to an organized body of digital information regardless of the manner in which the data or an organized body thereof is represented. Optionally, the database may be hardware, software, firmware, and/or any combination thereof. The database could be in a form of a table, a map, a grid, a packet, a datagram, a file, a document, a list or in any other form. The database includes any data storage software and systems, such as, for example, a relational database like PostgreSQL, MySQL,. IBM DB2^{®} and Oracle 9^{®}. Optionally, the database may be used interchangeably herein as database management system, as is common in the art. Furthermore, the database management system refers to the software program for creating and managing one or more databases. Optionally, the database may be operable to supports relational operations, regardless of whether it enforces strict adherence to the relational model, as understood by those of ordinary skill in the art.

The database is connected with the first virtual cabling engine, and can be arranged internally within the building or externally outside the building. Herein, the database of the query-response pairs of probe messages and respective reply messages is a structured collection of communication exchanges between the first virtual cabling engine and the one or more devices. Moreover, the database of incident responses and incident response triggering rules based on the query-response pairs is a structured collection of communication provided by the first virtual cabling engine upon receiving the respective reply messages. Herein, the term "*incident response triggering rules*" refers to rules and/or criteria that determine when the incident response is initiated based on the query-response pairs. A technical effect of forming the databases are that they can be analysed to identify patterns, trends, and/or anomalies in the communication exchanges. This analysis could be used to provide insights into behaviour of the one or more devices, a performance of the cable network, diagnosing issues in the cable network, and similar. Furthermore, the database also serves as a historical record of past communication exchanges between different components within the cable network.

Forming a database of query-response pairs of probe messages and respective reply messages, and a database of incident responses and incident response triggering rules based on the query-response pairs comprises creating a structured database that stores historical data of query-response interactions and incident responses, along with the rules that trigger these responses. By leveraging historical data for better decision-making, it enables to enhance interoperability, and to reduce the need for extensive physical cabling, and facilitate efficient automatic configuration and management of network connections between devices and the BMS. It further enhances providing a systematic way to store and use historical data for improved network management and configuration
The database allows the system to reference past interactions and responses, facilitating better decision-making and more accurate network configuration. The system records the probe messages sent to devices and their respective replies, creating a history of interactions. The system logs incident responses and the rules that triggered them, providing a record of how issues were resolved. The purpose of this embodiment is to use historical data to improve the system's ability to configure and manage the network, ensuring devices are correctly integrated and operational.

The database allows the system to reference previous interactions, improving the ability to handle a wide range of devices and protocols. The database allows the system to reference past interactions and responses, ensuring devices are configured accurately based on historical data. Storing and analyzing historical data improves the system's ability to predict and respond to network issues, enhancing reliability and performance. By using historical data for configuration, the system can automate many processes that would otherwise require manual intervention and additional cabling. By analyzing historical data, the system can predict and prevent potential issues, improving overall network reliability. Leveraging historical query-response pairs and incident responses enables more accurate and efficient network configuration and management. Automating the use of historical data for configuration reduces the need for manual checks and adjustments, streamlining network management. The system can dynamically adjust configurations based on historical data, ensuring efficient and reliable network management.

In an example, the database contains a record of a specific temperature sensor's query-response pairs. When a similar sensor is added to the network, the system can quickly configure it using the historical data.

In another example, the system logs an incident where a humidity sensor failed to respond. The historical data includes the steps taken to resolve the issue, which can be referenced if a similar incident occurs in the future.

In another example, the database shows that certain configurations led to better performance for specific devices. The system can use this data to optimize settings for newly added devices.

The present disclosure also relates to the second aspect as described above. Various embodiments and variants disclosed above, with respect to the aforementioned first aspect, apply *mutatis mutandis* to the second aspect. In this regard, the data processing system is dynamic in nature. Herein, using the means of the data processing system, the computer-implemented method is easy to implement and inexpensive.

Throughout the present disclosure, the phrase "*managing the cable network*" refers to supervising and/or maintain at least one of: a functioning, a performance, a robustness, of the cable network. The cable network is managed to ensure that the cable network operates in an efficient manner, and functions as per requirement.

The present disclosure also relates to the third aspect as described above. Various embodiments and variants disclosed above, with respect to the aforementioned first aspect and the second aspect, apply *mutatis mutandis* to the third aspect.

The term "*computer program*" refers to a software product comprising program instructions that are recorded on the data processing system, wherein the software product is executable upon a computing hardware for implementing the aforementioned steps of the computer-implemented method for configuring the cable network.

The present disclosure also relates to the fourth aspect as described above. Various embodiments and variants disclosed above, with respect to the aforementioned first aspect and the aforementioned second aspect, apply *mutatis mutandis* to the fourth aspect.

The instructions are recorded on the computer-readable storage medium, wherein the instructions are executable upon a computer hardware for implementing the aforementioned steps of the method for managing the cable network. The computer-readable storage medium can direct a machine (such as computer, other programmable data processing apparatus, or other devices) to function in a particular manner, such that the instructions stored in the computer-readable storage medium has series of steps to implement the function specified in a flowchart corresponding to the instructions. Examples of the non-transitory machine-readable data storage medium includes, but are not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

### DETAILED DESCRIPTION OF THE DRAWINGS

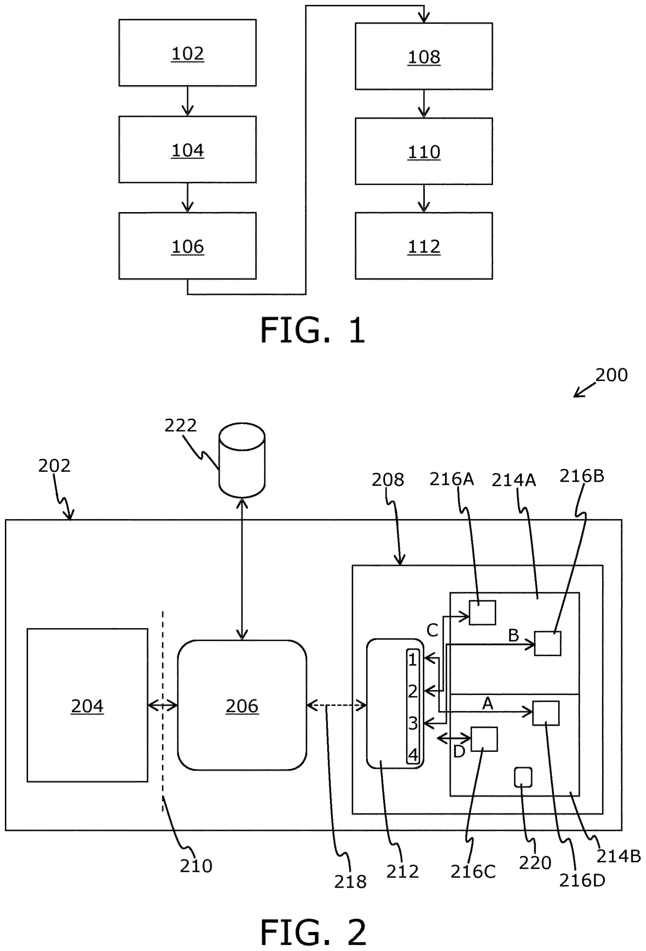

Referring to FIG. 1, illustrated are steps of a computer-implemented method for configuring a cable network, in accordance with an embodiment of the present disclosure. At step **102,** a first virtual cabling engine is connected via a management connection with a controlling unit of a building. At step **104,** one or more ports of a second virtual cabling engine are connected to one or more cables of one or more devices of a connected site. At step **106,** the second virtual cabling engine is configured to communicate over communication network with the first virtual cabling engine. At step **108,** the first virtual cabling engine sends a first probe message to a first port of the second virtual cabling engine to be forwarded to a first device of the one or more devices in the connected site. At step **110,** the first device, via the second virtual cabling engine, receives a first reply to the first probe message. At step **112,** the first virtual cabling engine, based on the first reply, generates a first incident response.

The aforementioned steps are only illustrative and other alternatives can also be provided where one or more steps are added, one or more steps are removed, or one or more steps are provided in a different sequence **without** departing from the scope of the cl**aim**s herein.

Referring to FIG. 2, there is shown an exemplary environment **200** in which the computer-implemented steps of FIG. 1 are used, in accordance with an embodiment of the present disclosure. The building **202** comprises a controlling unit **204,** a first virtual cabling engine **206,** and a connected site **208.** The first virtual cabling engine **206** is connected with the controlling unit **204** of the building **202** via a management connection **210.** A portion of the connected site **208** comprises a second virtual cabling engine **212,** and a remaining portion of the connected site **208** comprises two rooms **214A** and **214B.** The two rooms **214A, 214B** comprises one or more devices **216A, 216B, 216C,** and **216D.** The devices **216A, 216B** may be arranged in the two rooms **214A, 214B** in a following **manner:** the devices **216A** and **216C** may be arranged in the room **214A,** and the devices **216B** and **216D** may be arranged in the room **214B.** The second virtual cabling engine **212** comprises one or more ports (depicted as ports **1, 2, 3,** and **4**). The ports **1-4** of the second virtual cabling engine **212** are connected to the one or more cables **A, B, C,** and **D** of the devices**216A**, **216B, 216C, 216D.** The devices may be connected to the ports **1-4** in a following **manner:** the port **1** may be connected with the device **216D** through the cable **A,** the port **2** may be connected with the device **216A** through the cable **B,** the port **3** may be connected with the device **216B** through the cable **C,** and the port **4** may be connected with the device **216C** through the cable **D.** The second virtual cabling engine **212** is configured to communicate over a communication network **218** with the first virtual cabling engine **206.** Optionally, at least one of the rooms **214A** and/or **214B** comprises a measurement device **220** to measure an environmental parameter of at least one of the rooms **214A** and/or **214B.** For exemplary **purposes,** the measurement device **220** is arranged in the room **214B.** Optionally, a database **222** is connected with the first virtual cabling engine **206.**

FIG. 2 is merely an example, which should not unduly limit the scope of the cl**aim**s herein. A person skilled in the art will recognize many variations, alternatives, and modifications of embodiments of the present disclosure.

## Claims

1. A computer-implemented method for configuring a cable network, the method comprising:
(i) connecting a first virtual cabling engine (206) via management connection (210) with a controlling unit (204) of a building (202);
(ii) connecting to one or more ports (1-4) of a second virtual cabling engine (212) one or more cables (A-D) of one or more devices (216A-D) of a connected site (208);
(iii) configuring the second virtual cabling engine to communicate over communication network (218) with the first virtual cabling engine;
(iv) sending from the first virtual cabling engine a first probe message to a first port (1) of the second virtual cabling engine to be forwarded to a first device of the one or more devices in the connected site;
(v) receiving from the first device, via the second virtual cabling engine a first reply to the first probe message; and
(vi) generating by the first virtual cabling engine based on the first reply a first incident response.

2. The method according to claim 1, wherein the method comprises:
(vii) analysing the first incident response to find out at least one of: a type, a status, or a configuration of the first device.

3. The method according to claim 2 wherein the method further comprises:
(viiiA) confirming if the first device (1) is of: a first type, has a first status and/or has a first configuration, and if the confirmation is positive, configuring the first virtual cabling engine (206) to route messages between the controlling unit (204) and the first device of the first type or first status or the first configuration via the first port.

4. The method according to claim 2, wherein the method comprises:
(viiiB) confirming if the first device (1) is of: a first type, has a first status and/or has a first configuration and if the confirmation is negative, sending the first probe message to another port (2-4) than previously probed port or ports of the second virtual cabling engine (212) to be forwarded to the first device and repeating method from step (v) forward until the confirmation is positive.

5. The method according to any of the preceding claims, wherein the method further comprises:
sending from the first virtual cabling engine (206) a second probe message to a second port of the second virtual cabling engine (212) to be forwarded to a second device of the one or more devices (216A-D) in the connected site (208);
receiving from the second device, via the second virtual cabling engine a second reply to the second probe message;
generating by the first virtual cabling engine based on the second reply a second incident response; and
analysing based on the first incident response and based on the second incident response at least one of: a type, a status, a configuration of the first device (1) and the second device and a compatibility of the first device and the second device with each other.

6. The method according to any of the preceding claims, wherein (206) based on the first reply if the first reply corresponds to a recognized device signature.

7. The method according to any of the preceding claims, wherein generating the first incident response comprises remaking routing rules or generating an alert.

8. The method according to any of the preceding claims, wherein sending the first probe message comprises at least one of: sending a heartbeat message, or sending a discovery message.

9. The method according to any of the claims 1-7, wherein sending the first probe message comprises sending an identification signal, a type detection signal, a configuration signal, or a discovery signal.

10. The method according to any of the claims 1-7, wherein sending the first probe message comprises sending a device type test message, a device connection test message, or a device functionality test message.

11. The method according to any of the preceding claims, wherein the method further comprises measuring an environmental parameter of a first room of the connected site (208) with a measurement device (220).

12. The method according to claim 11, wherein the method further comprises sending a query message to at least one device in the first room and comparing a reply to the query message with the measured environmental parameter of the first room and use the comparison to verify if the at least one device is in the first room or not.

13. The method according to claim 11, wherein the method further comprises sending a control message to at least one device in the first room and comparing the measured environmental parameter with effect associated to the control message and to verify if the at least one device is in the first room or not.

14. The method according to any of the preceding claims, wherein the method further comprises forming a database (222) of query-response pairs of probe messages and respective reply messages, and database of incident responses and incident response triggering rules based on the query-response pairs.

15. A data processing system for managing a cable network, the data processing system comprising means for carrying out the method of any one of claims 1-14.
